# EUROPÄISCHE PATENTSCHRIFT

(11) **EP 1 340 282 B1**
(45) Veröffentlichungstag und Bekanntmachung des Hinweises auf die Patenterteilung: **19.05.2004**
(21) Anmeldenummer: 01983582.6
(22) Anmeldetag: 13.11.2001
(51) Int. Cl.: H01M 8/24, H01M 8/02, H01M 8/04

(54) **BRENNSTOFFZELLENANORDNUNG**
FUEL CELL ASSEMBLY
ENSEMBLE DE PILES A COMBUSTIBLE

(30) Priorität: 15.11.2000 DE 10056534
(43) Veröffentlichungstag der Anmeldung: 03.09.2003
(73) Patentinhaber: MTU CFC Solutions GmbH, 85521 Ottobrunn (DE)
(72) Erfinder: STEINFORT, Marc, 85737 Ismaning (DE); BEDNARZ, Marc, 82024 Taufkirchen (DE)
(74) Vertreter: Winter, Josef
(86) Internationale Anmeldenummer: PCT/EP2001/013091
(87) Internationale Veröffentlichungsnummer: WO 2002/041436

(56) Entgegenhaltungen:
- EP-A- 0 104 892
- WO-A-00/08703
- DE-A- 10 056 535

## Beschreibung

Die Erfindung betrifft eine Brennstoffzellenanordnung nach dem Oberbegriff des Anspruchs 1.

Es sind Brennstoffzellenanordnungen mit in Form eines Brennstoffzellenstapels angeordneten Brennstoffzellen bekannt, wobei die Brennstoffzellen jeweils eine Anode, eine Kathode und eine zwischen diesen angeordnete Elektrolytmatrix aufweisen und durch Bipolarplatten voneinander getrennt und elektrisch kontaktiert sind. Jeweils an den Anoden sind Stromkollektoren zum elektrischen Kontaktieren derselben und zum Führen von Brenngas an denselben vorgesehen und an den Kathoden sind Stromkollektoren zum elektrischen Kontaktieren derselben und zum Führen von Kathodengas an denselben vorgesehen. Weiterhin sind Mittel zum Zuführen und Abführen von Brenngas und Kathodengas zu und von den Brennstoffzellen vorgesehen, sowie eine Vorspannkraft erzeugende Mittel, durch welche die Brennstoffzellen innerhalb des Brennstoffzellenstapels unter eine gegenseitige Vorspannung in Längsrichtung des Brennstoffzellenstapels gesetzt werden.

Der Brennstoffzellenstapel herkömmlicher Brennstoffzellenanordnungen dieser Art ist beim Betrieb üblicherweise vertikal angeordnet, wobei alle Brennstoffzellen einer erforderlichen äußerlichen Vorspannkraft unterworfen sind und zusätzlich die unteren Zellen durch das Eigengewicht der oberen Zellen belastet werden. Damit dennoch alle Zellen einer gleichmäßigen Vorspannung und Belastung unterworfen sind, wird eine hohe äußere Vorspannkraft angelegt. Diese hohe mechanische Vorspannung führt notwendigerweise dazu, dass alle Komponenten der Brennstoffzellen, die diesen hohen Vorspannkräften ausgesetzt sind, entsprechend solide und widerstandsfähig ausgeführt sein müssen. Komponenten und Materialien, welche keinen derartig hohen Vorspannungen widerstehen können, sind somit zur Herstellung von solchen herkömmlichen Brennstoffzellenanordnungen nicht geeignet.

Die Aufgabe der Erfindung ist es eine verbesserte Brennstoffellenanordnung anzugeben. Insbesondere soll durch die Erfindung eine Brennstoffzellenanordnung geschaffen werden, bei welcher eine größere Freiheit hinsichtlich der Auswahl der in den Brennstoffzellen verwendeten Materialien steht.

Diese Aufgabe wird durch die im Anspruch 1 angegebene Brennstoffzellenanordnung gelöst.

Vorteilhafte Weiterbildungen der erfindungsgemäßen Brennstoffzellenanordnung sind in den Unteransprüchen angegeben.

Durch die Erfindung wird eine Brennstoffzellenanordnung mit in Form eines Brennstoffzellenstapels angeordneten Brennstoffzellen geschaffen. Die Brennstoffzellen enthalten jeweils eine Anode, eine Kathode und eine zwischen diesen angeordnete Elektrolytmatrix und sind durch Bipolarplatten voneinander getrennt und elektrisch kontaktiert. Jeweils an den Anoden sind Stromkollektoren zum elektrischen Kontaktieren derselben und zum Führen von Brenngas an denselben vorgesehen. An den Kathoden sind Stromkollektoren zum elektrischen Kontaktieren derselben und zum Führen von Kathodengas an denselben vorgesehen. Weiterhin sind Mittel zum Zuführen und Abführen von Brenngas und Kathodengas zu und von den Brennstoffzellen vorgesehen, sowie eine Vorspannkraft erzeugende Mittel, durch welche die Brennstoffzellen innerhalb des Brennstoffzellenstapels unter eine gegenseitige Vorspannung in Längsrichtung des Brennstoffzellenstapels gesetzt werden. Erfindungsgemäß ist es vorgesehen, dass der Brennstoffzellenstapel im Betrieb horizontal angeordnet ist, und dass die Vorspannkraft der Brennstoffzellen gering, an den Betriebszustand der Brennstoffzellenanordnung variabel anpassbar ist und auf alle Zellen eine gleichmäßig große Kraft wirkt.

Ein wesentlicher Vorteil der erfindungsgemäßen Brennstoffzellenanordnung ist es, dass durch eine Reduzierung der Vorspannung größere Freiheitsgrade für die Materialwahl und für die Auslegung der Brennstoffzellen geschaffen und die Vorspannkraft variabel an die verschiedenen Betriebszustände der Brennstoffzellen angepasst werden können.

Gemäß einer bevorzugten Ausbildung der erfindungsgemäßen Brennstoffzellenanordnung ist es vorgesehen, dass die die Vorspannkraft erzeugenden Mittel beim Anfahren der Brennstoffzellenanordnung eine hohe Vorspannkraft erzeugen und anschließend die Vorspannkraft reduzieren. Dies ermöglicht einen Ausgleich von Toleranzen und ein Setzen des Brennstoffzellenstapels beim Anfahren der Brennstoffzellenanordnung und beim Betrieb der Brennstoffzellenanordnung eine Verringerung des Kriechens von Komponenten durch die Verringerte Vorspannung und eine Erhöhung der Lebensdauer der in den Brennstoffzellen verwendeten Materialien.

Nach dem Anfahren wird die Vorspannkraft variiert, um die Druckkräfte im Stapel im wesentlichen gleich zu halten.

Gemäß einer Ausführungsform ist es vorgesehen, dass die die Vorspannkraft erzeugenden Mittel durch eine Vorrichtung gebildet sind, welche den Brennstoffzellenstapel von außen in seiner Längsrichtung unter Vorspannung setzen.

### Gemäß einer vorteilhaften Weiterbildung der erfindungsgemäßen

Brennstoffzellenanordnung ist es vorgesehen, dass im Inneren des Brennstoffzellenstapels eine Volumenzunahme erzeugende Materialien vorgesehen sind. Der Vorteil hiervon ist es, dass durch die Volumenzunahme solcher Materialien ein automatischer Ausgleich von Fertigungstoleranzen und ein Ausgleich eines Setzungsvorgangs innerhalb des Brennstoffzellenstapels, sowie auch eine Zunahme der an dem Brennstoffzellenstapel anliegenden Vorspannung erfolgt.

Vorzugsweise sind die eine Volumenzunahme erzeugenden Materialien in den Brennstoffzellen vorgesehen.

Gemäß eine bevorzugten Ausführungsform der erfindungsgemäßen Brennstoffzellenanordnung ist es vorgesehen, dass die eine Volumenzunahme erzeugenden Materialien beim Anfahren der Brennstoffzellenanordnung eine Volumenzunahme erleiden.

Vorzugsweise wird die Volumenzunahme durch eine chemische Veränderung der die Volumenzunahme erzeugenden Materialien hervorgerufen.

Gemäß einer vorteilhaften Ausführungsform der Erfindung ist es vorgesehen, dass die eine Volumenzunahme erzeugenden Materialien in den Elektroden und/oder Matrix der Brennstoffzellen enthalten sind.

Vorzugsweise sind die eine Volumenzunahme erzeugenden Materialien in den Kathoden der Brennstoffzellen enthalten.

Gemäß einer bevorzugten Ausführungsform ist es vorgesehen, dass die eine Volumenzunahme erzeugenden Materialien durch eine poröse Nickel-Sinterstruktur gebildet sind, welche an den Kathoden vorgesehen ist und die beim Anfahren der Brennstoffellenanordnung unter Volumenzunahme oxidiert wird.

Vorteilhafterweise liegt die poröse Nickel-Sinterstuktur in Form eines Nickel-Schaum-Materials mit einem Feststoffgehalt von 4 % bis ca. 75 %, vorzugsweise 4 % bis 35 % vor.

Gemäß einer besonders bevorzugten Ausführungsform der Erfindung ist es vorgesehen, dass die Stromkollektoren durch die poröse Nickel-Sinterstruktur gebildet sind, und dass die Elektroden in Form einer Schicht auf der die Stromkollektoren bildenden porösen Struktur vorgesehen sind.

Vorzugsweise sind Strömungswege in Form von Kanälen zum Führen von Brenngas und/oder Kathodengas in der die Stromkollektoren bildenden porösen Struktur vorgesehen.

Gemäß einer anderen vorteilhaften Ausführungsform der Erfindung ist es vorgesehen, dass eine Volumenzunahme erzeugende Materialien in den Matrizen der Brennstoffzellen enthalten sind. Eine solche Volumenzunahme erhöht den Anpressdruck der Matrix an den Elektroden und ermöglicht es der Matrix, einer thermisch induzierten Ausdehnung metallischer Bauteile im Bereich der Matrix zu folgen.

Gemäß einer vorteilhaften Ausführungsform der Erfindung sind die Matrizen der Brennstoffzellen aus Ausgangsmaterialien hergestellt, welche beim Anfahren der Brennstoffzellenanordnung ein Aluminat, insbesondere Lithiumaluminat, ein Oxid, insbesondere Zirkondioxid, und/oder ein Zirkonat, insbesondere Lithiumzirkonat bilden.

Gemäß einer vorteilhaften Weiterbildung der Erfindung ist es vorgesehen, dass die an dem Brennstoffzellenstapel erzeugte Vorspannung nach dem Anfahren der Brennstoffzellenanordnung reduzierbar ist. Dies hat den Vorteil, dass ein Kriechen von in dem Brennstoffzellenstapel bzw. in den Brennstoffzellen enthaltenen Komponenten verringert und die Lebensdauer der Komponenten erhöht wird.

Gemäß einem Aspekt der Erfindung erfolgt das Reduzieren der Vorspannung durch einen Toleranzausgleich und ein Setzen der in dem Brennstoffzellenstapel, insbesondere in den Brennstoffzellen enthaltenen Komponenten.

Gemäß einem anderen Aspekt der Erfindung ist es vorgesehen, dass das Reduzieren der Vorspannung durch Reduzierung der von außen an den Brennstoffzellenstapel angelegten Vorspannung erfolgt.

Im folgenden werden Ausführungsbeispiele der Erfindung anhand der Zeichnung erläutert. Es zeigen:
Figur 1 in einer schematisierten Seitenansicht den Aufbau einer Brennstoffzelle gemäß einem Ausführungsbeispiel der Erfindung;
Figur 2 eine schematisierte Darstellung, welche die horizontale Anordnung des Brennstoffzellenstapels gemäß einem Aspekt der Erfindung zeigt; und
Figur 3 und 4 in einer schematisierten vergrößerten Querschnittsansicht einen Ausschnitt einer einen Stromkollektor bildenden porösen Struktur mit einer darauf angeordneten Elektrode bzw. eine perspektivische Darstellung der den Stromkollektor bildenden porösen Struktur allein gemäß einem Ausführungsbeispiel der Erfindung.

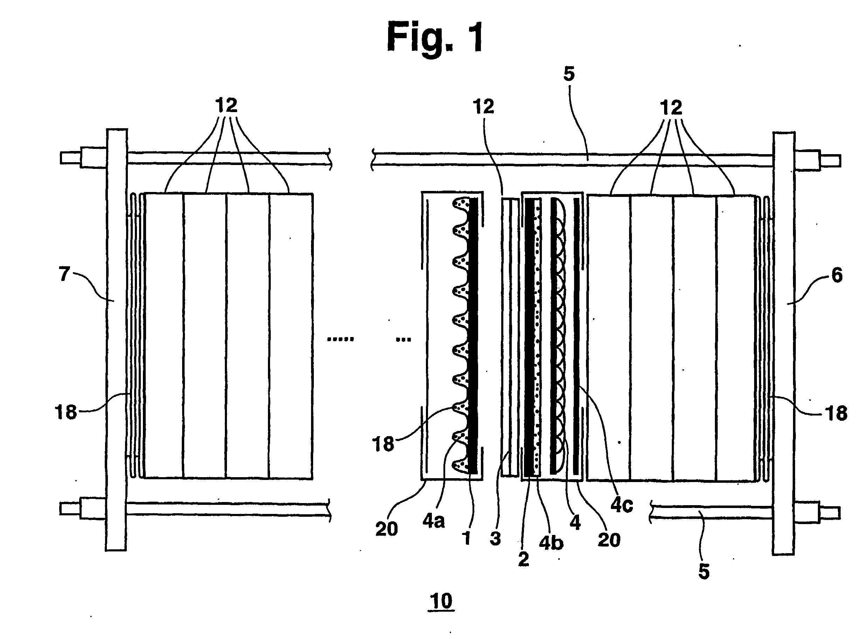

In Figur 1 bedeutet das Bezugszeichen 10 insgesamt einen Brennstoffzellenstapel, der aus einer Anzahl von Brennstoffzellen 12 besteht. Diese enthalten jeweils eine Anode 1, eine Kathode 2 und eine dazwischen;angeordnete Elektrolytmatrix 3. Benachbarte Brennstoffzellen 12 sind durch Bipolarplatten 4 voneinander getrennt, welche dazu dienen, die Ströme eines Brenngases B und eines Kathodengases bzw. Oxidationsgases O voneinander getrennt über die Anode 1 bzw. über die Kathode 2 der Brennstoffzellen 12 zu führen. Dabei sind die Anode 1 und die Kathode 2 benachbarter Brennstoffzellen 12 durch die Bipolarplatten 4 gastechnisch voneinander getrennt, jedoch über jeweilige Stromkollektoren 4a, 4b elektrisch kontaktiert, nämlich einen Stromkollektor 4a an der Anode 1 und einen Stromkollektor 4b an der Kathode 2.

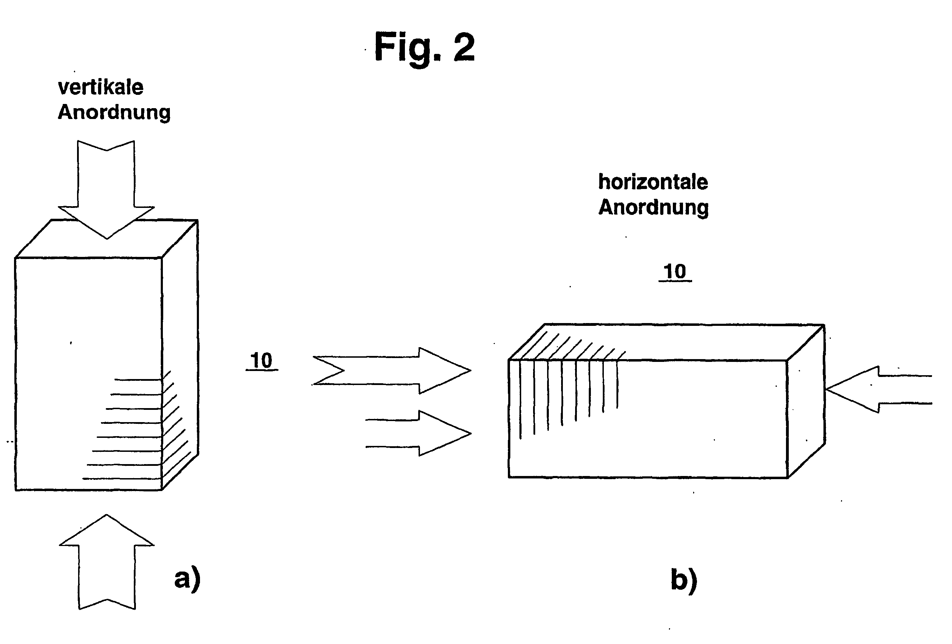

Gemäß einem wesentlichen Aspekt der Erfindung wird der Brennstoffzellenstapel 10 horizontal betrieben, wie es in Figur 2b) gezeigt ist. Dies bedeutet, dass alle Brennstoffzellen einer gleichmäßigen Vorspannung und Belastung unterliegen, wodurch die Vorspannung und damit die Belastung der einzelnen Brennstoffzellen gleichmäßig und gering gehalten wird. Hierdurch wird eine zusätzliche Freiheit hinsichtlich der Verwendung der einzelnen Komponenten der Brennstoffzellen gegeben, d.h. es können solche Komponenten verwendet werden, die einer hohen Belastung nicht standhalten würden. Im Vergleich dazu werden in einer Brennstoffzellenanordnung mit einem vertikal angeordneten Brennstoffzellenstapel 10, wie er in Figur 2a) gezeigt ist, die unteren Zellen zusätzlich zu der Vorspannung durch das Eigengewicht der oberen belastet und damit wesentlich stärker unter Druck gesetzt als es den darin enthaltenen Komponenten zuträglich ist. Vorzugsweise ist die Vorspannkraft der Brennstoffzellen 12 innerhalb des Brennstoffstapels 10 gering und an den Betriebszustand der Brennstoffzellenanordnung variabel anpassbar. Ganz allgemein sind hierfür die Vorspannkraft erzeugende Mittel vorgesehen, die beim Anfahren der Brennstoffzellenanordnung bei deren in Betriebnahme eine hohe Vorspannkraft erzeugen und anschließend die Vorspannkraft reduzieren. Dadurch können beim Anfahren der Brennstoffzellenanordnung Toleranzen und die Effekte eines Setzens einzelner Komponenten der Brennstoffzellen ausgeglichen werden, während beim nachfolgenden Betrieb der Brennstoffzellenanordnung eine Verringerung des Kriechens der Komponenten der einzelnen Brennstoffzellen 12 durch eine verringerte Vorspannung erreicht wird. Dies hat zum einen eine Reduzierung lebensdauerbegrenzender Effekte zur Folge und ermöglicht zum anderen die Verwendung von Komponenten für die Brennstoffzellen, die einer hohen Dauerbelastung nicht gewachsen sind.

Die die Vorspannkraft erzeugenden Mittel können durch eine Vorrichtung gebildet sein, welche den Brennstoffzellenstapel 10 von außen in seiner Längsrichtung unter Vorspannung setzt. Solche Mittel können beispielsweise durch an den Enden des Brennstoffzellenstapels 10 vorgesehene Endplatten 6, 7 gebildet sein, welche durch Zugstangen 5 miteinander verbunden und gegeneinander verspannt sind, so dass die einzelnen Brennstoffzellen 12 unter einem vorgegebenen Anpressdruck aneinander gehalten werden. Zur Variation der Vorspannungskraft ist die Kraft, welche die Zugstangen auf die Endplatten ausüben, einstellbar. Dazu können Federn oder ein Balg 18 dienen, dessen Druck variabel einstellbar ist. Der Balg 18 kann auch beispielsweise entsprechend DE 198 52 362 C2 ausgebildet sein. Anstelle des Balgs 18 können die Federn angeordnet sein, die jedoch nicht dargestellt sind.

Im Inneren des Brennstoffzellenstapels 10 sind Materialien vorgesehen, welche eine Volumenzunahme bei der Inbetriebnahme des Brennstoffzellenstapels erzeugen. Solche Materialien sind insbesondere in den Brennstoffzellen 12 vorgesehen und so ausgebildet, dass sie beim Anfahren der Brennstoffzellenanordnung ihr Volumen vergrößern. Dies kann insbesondere durch eine chemische Veränderung der die Volumenzunahme erzeugenden Materialien erfolgen. Bei einem hier beschriebenen Ausführungsbeispiel sind die eine Volumenzunahme erzeugenden Materialien in den Elektroden 1, 2, insbesondere in den Kathoden 2 der Brennstoffzellen 12 enthalten.

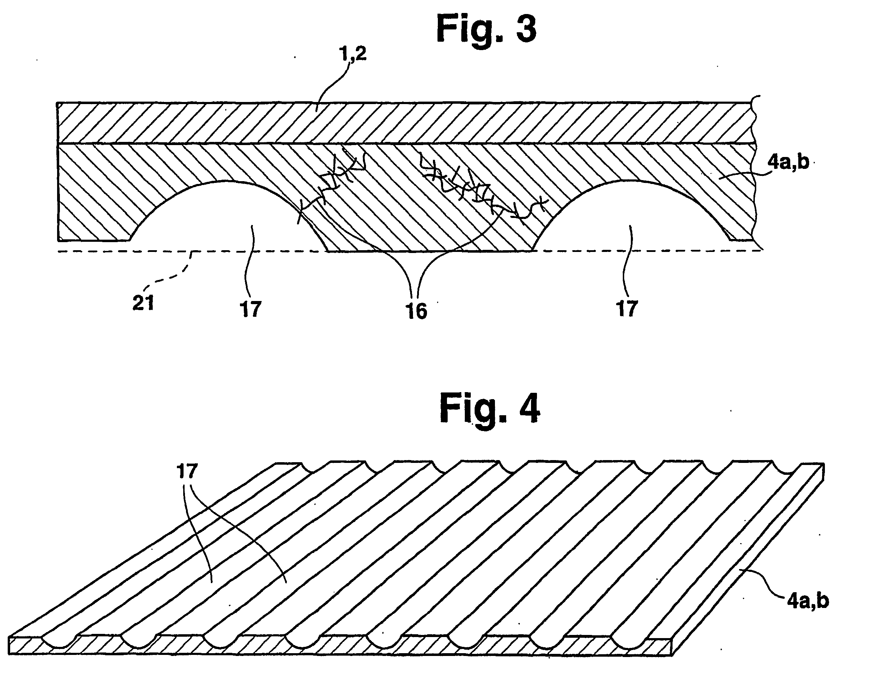

Gemäß einem Ausführungsbeispiel der Erfindung, das in Figur 3 und 4 dargestellt ist, sind die eine Volumenzunahme erzeugenden Materialien durch eine poröse Nickel-Sinterstruktur gebildet, welche an den Kathoden 2 vorgesehen ist und beim Anfahren der Brennstoffzellenanordnung unter Volumenzunahme oxidiert wird. Diese poröse Nickel-Sinterstruktur liegt in Form eines Nickel-Schaum-Materials vor, das einen Feststoffgehalt von 4 % bis ca. 75 % , vorzugsweise 4 % bis 35 % aufweist. Im einzelnen bildet diese poröse Nickel-Sinterstruktur die Stromkollektoren 4a, 4b der Elektroden 1, 2, insbesondere die Stromkollektoren 4b der Kathoden 2, wobei die Elektroden 1, 2 in Form einer Schicht auf der die Stromkollektoren 4a, 4b bildenden porösen Struktur vorgesehen sind. Somit ist insbesondere die Kathode 2 auf einer porösen Nickel-Sinterstruktur in Form des kathodenseitigen Stromkollektors 4b angeordnet, wobei diese Nickel-Sinterstruktur beim Anfahren der Brennstoffzellenanordnung unter Volumenzunahme oxidiert wird und damit eine erhöhte Vorspannung innerhalb der Brennstoffzelle und damit innerhalb des Brennstoffzellenstapels erzeugt bzw. Fertigungstoleranzen und die Effekte eines Setzens einzelner Komponenten innerhalb der Brennstoffzellen 12 ausgleicht. In der die Stromkollektoren 4a, 4b bildenden porösen Struktur sind Strömungswege in Form von Kanälen 17 vorgesehen, welche dazu dienen, Brenngas und/oder Kathodengas an den Stromkollektoren 4a, 4b vorbeizuführen, vergleiche auch Figur 4. Im Inneren der porösen Nickel-Sinterstruktur sind mikroskopische Strömungswege 16 auf Grund der Porosität der Nickel-Sinterstruktur vorhanden, durch welche das Gas von den Kanälen 17 zu den Elektroden 1,2 transportiert wird, vergleiche Figur 3.

Gemäß einem weiteren Ausführungsbeispiel der Erfindung können die eine Volumenzunahme erzeugenden Materialien in den Matrizen 3 der Brennstoffzellen 12 enthalten sein. Hierzu sind die Matrizen 3 aus Ausgangsmaterialien hergestellt, welche beim Anfahren der Brennstoffzellenanordnung ein Aluminat, insbesondere Lithiumaluminat, ein Oxid, insbesondere Zirkondioxid, und/oder ein Zirkonat, insbesondere Lithiumzirkonat bilden. Der beim Anfahren der Brennstoffzellenanordnung in-situ synthetisierte Matrixwerkstoff schwindet negativ, d.h. unterliegt einer makroskopischen Volumenzunahme, die eine Längenänderung der Matrix und damit eine Erhöhung des Anpressdrucks bewirkt. Damit ist die Matrix 3 in der Lage, thermisch induzierten Ausdehnungen der sie umgebenden metallischen Bauteile der Brennstoffzelle 12 zu folgen, so dass keine Zugspannungen an der Matrix entstehen und diese rissfrei ausbrennen kann. Gemäß einem Ausführungsbeispiel wird die Matrix aus einem Schlicker hergestellt, welcher kommerziell erhältliches Al2O3 in einer Korngröße von etwa 0,5 bis 0,7 µm enthält. Eine weitere Mahlung hiervon ist nicht notwendig. Die Umwandlung zu LiAlO2 erfolgt über Lithiumkarbonat, das sich bei höheren Temperaturen zu Lithiumoxid zersetzt. Weiterhin wird zur Reduzierung des reaktiven Anteils aus einem Pulsationsreaktor stammendes Lithiumaluminat zugesetzt. Ferner dient Zirkonkarbid, welches zu Zirkondioxid und später mit Lithiumacetat zu Lithiumzirkonat umgewandelt wird, dazu die Schwindung einzustellen. Die übrigen Komponenten des Schlickers entsprechen denen eines herkömmlichen Schlickers zur Herstellung einer Matrix von Schmelzkarbonatbrennstoffzellen.

Die vorher beschriebene Art der Herstellung von Stromkollektoren und/oder Elektrolytmatrix ermöglicht eine kalte Fertigung der Brennstoffzellen mit "grünen" Materialien ohne die sonst notwendigen Hochtemperaturprozesse unter kontrollierter Atmosphäre, die Sinterung bzw. Synthetisierung der Materialien erfolgt erst beim Anfahren der Brennstoffzellenanordnung.

Gemäß einem weiteren Aspekt der Erfindung ist die an dem Brennstoffzellenstapel 10 erzeugte Vorspannung nach dem Anfahren der Brennstoffzellenanordnung reduzierbar. Dies führt zu einer Verminderung der Vorspannung und damit zu einer Verringerung des Kriechens der in den Brennstoffzellen 12 enthaltenen Komponenten auf Grund des Verringerten Vorspannungsdrucks und damit zu einer Reduzierung lebensdauerbegrenzender Effekte sowie der Möglichkeit der Verwendung von Komponenten, etwa den oben für die Herstellung der Stromkollektoren 4a, 4b beschriebenen porösen Sinterstrukturen, ohne dass diese beschädigt würden.

Gemäß einem Aspekt der Erfindung kann das Reduzieren der Vorspannung durch einen Toleranzausgleich und ein Setzen der in dem Brennstoffzellenstapel 10, d.h. insbesondere in den Brennstoffzellen 12 enthaltenen Komponenten erfolgen.

Gemäß einer Alternative kann das Reduzieren der Vorspannung durch Reduzierung der von außen an den Brennstoffzellenstapel 10 angelegten Vorspannung erfolgen, also durch Reduzierung etwa der Vorspannung, der durch die Zugstangen 5 auf die Endplatten 6, 7 an den Enden des Brennstoffzellenstapels 10 ausgeübt wird, z. B. über Bälge 18 oder Federn.

### Bezugszeichenliste

- 1: Anode
- 2: Kathode
- 3: Elektrolytmatrix
- 4: Bipolarplatte
- 4a: Stromkollektor
- 4b: Stromkollektor
- 4c: Bipolarblech
- 5: Zugstange
- 6: Endplatte
- 7: Endplatte
- 10: Brennstoffzellenstapel
- 12: Brennstoffzelle
- 14: Gasverteiler
- 15: Gasverteilerdichtung
- 16: Strömungswege
- 17: Strömungswege
- 18: Balg
- B: Brenngas
- O: Oxidationsgas

## Patentansprüche

1. Brennstoffzellenanordnung mit in Form eines Brennstoffellenstapels (10) angeordneten Brennstoffzellen (12), die jeweils eine Anode (1), eine Kathode (2) und eine zwischen diesen angeordnete Elektrolytmatrix (3) aufweisen und durch Bipolarplatten (4) voneinander getrennt und elektrisch kontaktiert sind, und die jeweils an den Anoden (1) Stromkollektoren (4a) zum elektrischen Kontaktieren derselben und zum Führen von Brenngas an denselben und an den Kathoden (2) Stromkollektoren (4b) zum elektrischen Kontaktieren derselben und zum Führen von Kathodengas an denselben aufweisen, und mit Mitteln zum Zuführen und Abführen von Brenngas und Kathodengas zu und von den Brennstoffzellen (12), sowie mit eine Vorspannkraft erzeugenden Mitteln, durch welche die Brennstoffzellen (12) innerhalb des Brennstoffzellenstapels (10) unter eine gegenseitige Vorspannung in Längsrichtung des Brennstoffzellenstapels (10) gesetzt werden, **dadurch gekennzeichnet, dass** die Stromkollektoren (4a, 4b) durch eine poröse Nickel-Sinterstruktur mit einem Feststoffgehalt von 4 % bis 75 %, vorzugsweise 4 % bis 35 % gebildet sind, dass der Brennstoffzellenstapel (10) im Betrieb bei niedriger Vorspannkraft horizontal angeordnet ist, und dass die Vorspannkraft der Brennstoffzellen (12) an den Betriebszustand der Brennstoffzellenanordnung variabel anpassbar ist.

2. Brennstoffzellenanordnung nach Anspruch 1, **dadurch gekennzeichnet, dass** die die Vorspannkraft erzeugenden Mittel beim Anfahren der Brennstoffzellenanordnung eine hohe Vorspannkraft erzeugen und anschließend die Vorspannkraft reduzieren.

3. Brennstoffzellenanordnung nach Anspruch 1 oder 2, **dadurch gekennzeichnet, dass** die Vorspannkraft nach dem Anfahren derart variiert wird, dass die Druckkräfte im Stapel im wesentlichen gleich gehalten werden.

4. Brennstoffzellenanordnung nach Anspruch 1, 2 oder 3, **dadurch gekennzeichnet, dass** die die Vorspannkraft erzeugenden Mittel durch eine Vorrichtung (5, 6, 7, 18) gebildet sind, welche den Brennstoffzellenstapel (10) von außen in seiner Längsrichtung unter Vorspannung setzen.

5. Brennstoffzellenanordnung nach Anspruch 1, 2, 3 oder 4, **dadurch gekennzeichnet, dass** im Inneren des Brennstoffzellenstapels (10) eine Volumenzunahme erzeugende Materialien vorgesehen sind.

6. Brennstoffzellenanordnung nach Anspruch 5, **dadurch gekennzeichnet, dass** die eine Volumenzunahme erzeugenden Materialien in den Brennstoffzellen (12) vorgesehen sind.

7. Brennstoffzellenanordnung nach Anspruch 6, **dadurch gekennzeichnet, dass** die eine Volumenzunahme erzeugenden Materialien beim Anfahren der Brennstoffzellenanordnung eine Volumenzunahme erleiden.

8. Brennstoffzellenanordnung nach Anspruch 7, **dadurch gekennzeichnet, dass** die Volumenzunahme durch eine chemische Veränderung der eine Volumenzunahme erzeugenden Materialien hervorgerufen wird.

9. Brennstoffzellenanordnung nach Anspruch 8, **dadurch gekennzeichnet, dass** die eine Volumenzunahme erzeugenden Materialien in den Elektroden (1, 2) der Brennstoffzellen (12) enthalten sind.

10. Brennstoffzellenanordnung nach Anspruch 9, **dadurch gekennzeichnet, dass** die eine Volumenzunahme erzeugenden Materialien in den Kathoden (2) der Brennstoffzellen (12) enthalten sind.

11. Brennstoffzellenanordnung nach Anspruch 10, **dadurch gekennzeichnet, dass** die eine Volumenzunahme erzeugenden Materialien durch eine poröse Nickel-Sinterstruktur gebildet sind, welche an den Kathoden (2) vorgesehen ist und beim Anfahren der Brennstoffzellenanordnung unter Volumenzunahme oxidiert wird.

12. Brennstoffzellenanordnung nach Anspruch 11, **dadurch gekennzeichnet, dass** die poröse Nickel-Sinterstruktur in Form eines Nickel-Schaum-Materials mit einem Feststoffgehalt von 4 % bis ca. 75 %, vorzugsweise 4 % bis 35 % vorliegt.

13. Brennstoffzellenanordnung nach einem der Ansprüche 1 bis 12, **dadurch gekennzeichnet, dass** die Elektroden (1, 2) in Form einer Schicht auf der die Stromkollektoren (4a, 4b) bildenden porösen Struktur vorgesehen sind.

14. Brennstoffzellenanordnung nach einem der Ansprüche 1 bis 13, **dadurch gekennzeichnet, dass** die Strömungswege in Form von Kanälen (17) zum Führen von Brenngas und/oder Kathodengas in der die Stromkollektoren (4a, 4b) bildenden porösen Struktur vorgesehen sind.

15. Brennstoffzellenanordnung nach einem der Ansprüche 8 bis 14, **dadurch gekennzeichnet, dass** die eine Volumenzunahme erzeugenden Materialien in den Matrizen (3) der Brennstoffzellen (12) enthalten sind.

16. Brennstoffzellenanordnung nach Anspruch 15, **dadurch gekennzeichnet, dass** die Matrizen (3) der Brennstoffzellen (12) aus Ausgangsmaterialien hergestellt sind, welche beim Anfahren der Brennstoffzellenanordnung an Aluminat, insbesondere Lithiumaluminat, ein Oxid, insbesondere Zirkondioxid, und/oder ein Zirkonat, insbesondere Lithiumzirkonat bilden.

17. Brennstoffzellenanordnung nach einem der Ansprüche 7 bis 16, **dadurch gekennzeichnet, dass** die an dem Brennstoffzellenstapel (10) erzeugte Vorspannung nach dem Anfahren der Brennstoffzellenanordnung reduzierbar ist.

18. Brennstoffzellenanordnung nach Anspruch 17, **dadurch gekennzeichnet, dass** das Reduzieren der Vorspannung durch einen Toleranzausgleich und ein Setzen der in dem Brennstoffzellenstapel (10), insbesondere in den Brennstoffzellen (12) enthaltenen Komponenten erfolgt.

19. Brennstoffzellenanordnung nach einem der Ansprüche 4 bis 18, **dadurch gekennzeichnet, dass** das Reduzieren der Vorspannung durch Reduzierung der von außen an den Brennstoffzellenstapel (10) angelegten Vorspannung erfolgt.

## Claims

1. Fuel cell assembly having fuel cells (12) which are arranged in the form of a fuel cell stack (10), each have an anode (1), a cathode (2) and an electrolyte matrix (3) arranged between the anode and cathode, have bipolar plates (4) which separate them from one another and make electrical contact with them, and which each have current collectors (4a) at the anodes (1) for making electrical contact with the latter and for guiding fuel gas to the latter, and current collectors (4b) at the cathodes (2) for making electrical contact with the latter and for guiding cathode gas to the latter, and having, means for supplying and discharging fuel gas and cathode gas to and from the fuel cells (12), and having means which generate a prestressing force and by means of which the fuel cells (12) within the fuel cell stack (10) are placed under a prestress with respect to one another in the longitudinal direction of the fuel cell stack (10), **characterized in that** the current collectors (4a, 4b) are formed by a porous sintered nickel structure with a solids content of from 4% to 75%, preferably from 4% to 35%, **in that** the fuel cell stack (10), in operation, is arranged horizontally with a low prestressing force, and **in that** the prestressing force of the fuel cells (12) can be variably adapted to the operating state of the fuel cell assembly.

2. Fuel cell assembly according to Claim 1, **characterized in that** the means which generate the prestressing force generate a high prestressing force when the fuel cell assembly is being started up and then reduce the prestressing force.

3. Fuel cell assembly according to Claim 1 or 2, **characterized in that** the prestressing force, after the fuel cell assembly has been started up, is varied in such a manner that the compressive forces in the stack are kept substantially constant.

4. Fuel cell assembly according to Claim 1, 2 or 3, **characterized in that** the means which generate the prestressing force are formed by a device (5, 6, 7, 18) which places the fuel cell stack (10) under prestress from the outside in its longitudinal direction.

5. Fuel cell assembly according to Claim 1, 2, 3 or 4, **characterized in that** materials which generate an increase in volume are provided in the interior of the fuel cell stack (10).

6. Fuel cell assembly according to Claim 5, **characterized in that** the materials which generate an increase in volume are provided in the fuel cells (12).

7. Fuel cell assembly according to Claim 6, **characterized in that** the materials which generate an increase in volume experience an increase in volume when the fuel cell assembly is being started up.

8. Fuel cell assembly according to Claim 7, **characterized in that** the increase in volume is caused by a chemical change in the materials which generate an increase in volume.

9. Fuel cell assembly according to Claim 8, **characterized in that** the materials which generate an increase in volume are contained in the electrodes (1, 2) of the fuel cells (12).

10. Fuel cell assembly according to Claim 9, **characterized in that** the materials which generate an increase in volume are contained in the cathodes (2) of the fuel cells (12).

11. Fuel cell assembly according to Claim 10, **characterized in that** the materials which generate an increase in volume are formed by a porous sintered nickel structure which is provided at the cathodes (2) and is oxidized, with an increase in volume, when the fuel cell assembly is started up.

12. Fuel cell assembly according to Claim 11, **characterized in that** the porous sintered nickel structure is in the form of a nickel foam material with a solids content of from 4% to approx. 75%, preferably 4% to 35%.

13. Fuel cell assembly according to one of Claims 1 to 12, **characterized in that** the electrodes (1, 2) are provided in the form of a layer on the porous structure which forms the current collectors (4a, 4b).

14. Fuel cell assembly according to one of Claims 1 to 13, **characterized in that** the flow paths are provided in the form of channels (17) for guiding fuel gas and/or cathode gas in the porous structure which forms the current collectors (4a, 4b).

15. Fuel cell assembly according to one of Claims 8 to 14, **characterized in that** the materials which generate an increase in volume are contained in the matrices (3) of the fuel cells (12).

16. Fuel cell assembly according to Claim 15, **characterized in that** the matrices (3) of the fuel cells (12) are made from starting materials which form an aluminate, in particular lithium aluminate, an oxide, in particular zirconium dioxide, and/or a zirconate, in particular lithium zirconate, when the fuel cell assembly is being started up.

17. Fuel cell assembly according to one of Claims 7 to 16, **characterized in that** the prestress which is generated at the fuel cell stack (10) can be reduced after the fuel cell assembly has been started up.

18. Fuel cell assembly according to Claim 17, **characterized in that** the reduction in the prestress is effected by tolerance compensation and by settling of the components which are included in the fuel cell stack (10), in particular in the fuel cells (12).

19. Fuel cell assembly according to one of Claims 4 to 18, **characterized in that** the reduction in the prestress is effected by a reduction in the prestress applied to the fuel cell stack (10) from the outside.

## Revendications

1. Agencement de cellules à combustible qui présente des cellules à combustible (12) qui sont agencées sous la forme d'une pile (10) de cellules à combustible, qui présentent chacune une anode (1), une cathode (2) et une matrice d'électrolyte (3) disposées entre celles-ci, séparées l'une de l'autre par des plaques bipolaires (4) et mises en contact électrique, les collecteurs de courant (4a) prévus sur chacune des anodes (1) présentant pour assurer le contact électrique avec celle-ci et pour conduire le gaz combustible sur celle-ci et des collecteurs de courant (4b) sur les cathodes (2) pour assurer les contacts électriques avec celles-ci et pour amener du gaz de cathodes sur celles-ci, et dotées de moyens pour apporter le gaz combustible aux cellules à combustible (12) et évacuer le gaz de cathodes des cellules à combustible (12), ainsi que de moyens qui créent une force de précontrainte par laquelle les cellules à combustible (12) sont placées à l'intérieur de la pile (10) de cellules à combustible sous une précontrainte mutuelle dans le sens de la longueur de la pile (10) de cellules à combustible, **caractérisé en ce que** les collecteurs de courant (4a, 4b) sont formés d'une structure poreuse de nickel fritté dont la teneur en solide est comprise entre 4% et 75% et de préférence entre 4% et 35%, **en ce qu'**en fonctionnement, la pile (10) de cellules à combustible est disposée horizontalement sous faible force de précontrainte et **en ce que** la force de précontrainte des cellules à combustible (12) peut être adaptée de manière variable à l'état de fonctionnement de l'agencement de cellules à combustible.

2. Agencement de cellules à combustible selon la revendication 1, **caractérisé en ce que** les moyens qui créent la force de précontrainte créent lors du démarrage de l'agencement de cellules à combustible une force de précontrainte élevée et réduisent ensuite la force de précontrainte.

3. Agencement de cellules à combustible selon les revendications 1 ou 2, **caractérisé en ce qu'**après le démarrage, la force de précontrainte est modifiée de manière à maintenir essentiellement constantes les forces de poussée dans la pile.

4. Agencement de cellules à combustible selon les revendications 1, 2 ou 3, **caractérisé en ce que** les moyens qui créent la force de précontrainte sont formés par un dispositif (5, 6, 7, 18) qui place la pile (10) de cellules à combustible sous une précontrainte appliquée de l'extérieur dans le sens de sa longueur.

5. Agencement de cellules à combustible selon les revendications 1, 2, 3 ou 4, **caractérisé en ce qu'**à l'intérieur de la pile (10) de cellules à combustible, sont prévus des matériaux qui créent une augmentation de volume.

6. Agencement de cellules à combustible selon la revendication 5, **caractérisé en ce que** les matériaux qui créent une augmentation de volume sont prévus dans les cellules à combustible (12).

7. Agencement de cellules à combustible selon la revendication 6, **caractérisé en ce que** les matériaux qui créent une augmentation de volume confèrent une augmentation de volume à l'agencement de cellules à combustible lors du démarrage.

8. Agencement de cellules à combustible selon la revendication 7, **caractérisé en ce que** l'augmentation de volume est provoquée par une modification chimique des matériaux qui crée une augmentation de volume.

9. Agencement de cellules à combustible selon la revendication 8, **caractérisé en ce que** les matériaux qui créent une augmentation de volume sont contenus dans les électrodes (1, 2) des cellules à combustible (12).

10. Agencement de cellules à combustible selon la revendication 9, **caractérisé en ce que** les matériaux qui créent une augmentation de volume sont contenus dans les capteurs (2) des cellules à combustible (12).

11. Agencement de cellules à combustible selon la revendication 10, **caractérisé en ce que** les matériaux qui créent une augmentation de volume sont formés par une structure poreuse de nickel fritté qui est prévue sur les cathodes (2) et qui est oxydée avec augmentation de volume lors du démarrage de l'agencement des cellules à combustible.

12. Agencement de cellules à combustible selon la revendication 11, **caractérisé en ce que** la structure poreuse en nickel fritté présente la forme d'un matériau de mousse de nickel dont la teneur en solide est comprise entre 4% et environ 75% et de préférence entre 4% et 35%.

13. Agencement de cellules à combustible selon l'une des revendications 1 à 12, **caractérisé en ce que** les électrodes (1, 2) sont prévues sous la forme d'une couche sur la structure poreuse qui forme les collecteurs de courant (4a, 4b).

14. Agencement de cellules à combustible selon l'une des revendications 1 à 13, **caractérisé en ce que** les parcours de courant sont prévus sous la forme de canaux (17) pour l'amenée de gaz combustible et/ou de gaz de cathodes dans la structure poreuse qui forme les collecteurs de courant (4a, 4b).

15. Agencement de cellules à combustible selon l'une des revendications 8 à 14, **caractérisé en ce que** les matériaux qui créent une augmentation de volume sont contenus dans la matrice (3) des cellules à combustible (12).

16. Agencement de cellules à combustible selon la revendication 15, **caractérisé en ce que** la matrice (3) des cellules à combustible (12) est fabriquée à partir de matériaux de départ qui, lors du démarrage de l'agencement de cellules à combustible, forment un aluminate, en particulier l'aluminate de lithium, un oxyde, en particulier du dioxyde de zirconium et/ou un zirconate, en particulier le zirconate de lithium.

17. Agencement de cellules à combustible selon l'une des revendications 7 à 16, **caractérisé en ce que** la précontrainte créée sur la pile (10) de cellules à combustible peut être réduite après le démarrage de l'agencement de cellules à combustible.

18. Agencement de cellules à combustible selon la revendication 17, **caractérisé en ce que** la réduction de la précontrainte s'effectue par compensation des tolérances et précipitation des composants contenus dans la pile (10) de cellules à combustible et en particulier dans les cellules à combustible (12).

19. Agencement de cellules à combustible selon l'une des revendications 4 à 18, **caractérisé en ce que** la réduction de la précontrainte s'effectue par réduction de la précontrainte appliquée de l'extérieur sur la pile (10) de cellules à combustible.
